# EUROPEAN PATENT APPLICATION

(11) **EP 2 254 133 A1**
(43) Date of publication of application: **24.11.2010**
(21) Application number: 10163151.3
(22) Date of filing: 18.05.2010
(51) Int. Cl.: H01G 9/058, H01G 9/155

(54) **Method for producing solid electrolytic capacitor**

(30) Priority: 20.05.2009 JP 2009121489
(71) Applicant: Nec Tokin Corporation, Sendai-shi, Miyagi 982-8510 (JP)
(72) Inventor: Suzuki, Satoshi, Sendai-shi Miyagi 982-8510 (JP); Nobuta, Tomoki, Sendai-shi Miyagi 982-8510 (JP); Takahashi, Naoki, Sendai-shi Miyagi 982-8510 (JP); Sugawara, Yasuhisa, Sendai-shi Miyagi 982-8510 (JP); Kobayakawa, Ryuta, Sendai-shi Miyagi 982-8510 (JP); Oshima, Akiko, Sendai-shi Miyagi 982-8510 (JP)
(74) Representative: Duckett, Anthony Joseph

(57) **Abstract**

There is provided a method for producing a solid electrolytic capacitor having an improved capacitance appearance ratio by forming a conductive polymer layer in a few steps. A method for producing a solid electrolytic capacitor obtained by forming solid electrolyte layer 5 and cathode 6 on dielectric layer 2 formed on anode body 1, which is a porous body of a valve action metal, includes the step of forming precoat layer 3 by the steps of impregnating the porous body with polyacid, water washing, and drying.

## Description

### BACKGROUND OF THE INVENTION

### Field of the Invention

The present invention relates to a method for producing a solid electrolytic capacitor, and particularly to a producing method that can fabricate a solid electrolytic capacitor having a high capacitance appearance ratio by impregnation with a conductive polymer compound-dispersed aqueous solution.

### Description of the Related Art

Solid electrolytic capacitors have been developed which are obtained by forming a dielectric oxide film layer on a porous body of a valve action metal, such as tantalum, aluminum, titanium, niobium, and zirconium, by an electrolytic oxidation method and then forming a conductive polymer layer on this oxide film as a solid electrolyte. Methods for forming the conductive polymer layer of this solid electrolytic capacitor are broadly classified into a chemical oxidative polymerization method and an electrolytic oxidative polymerization method, and a method for impregnating with a conductive polymer compound-dispersed aqueous solution.

In the method for forming a conductive polymer by chemical oxidative polymerization and electrolytic oxidative polymerization, individually impregnating with an aqueous solution containing a monomer, such as pyrrole, thiophene, 3,4-ethylenedioxythiophene, and aniline, which constitutes a conductive polymer material, and an aqueous solution containing an oxidant, such as peroxodisulfuric acid, or impregnating with a mixed aqueous solution containing a monomer and an oxidant causes polymerization reaction involving oxidation-reduction, thereby forming a conductive polymer layer (solid electrolyte layer) including a polymer, such as polyethylenedioxythiophene, on a dielectric oxide film layer (see, for example, JP2005-159154A).

The method for impregnating with a conductive polymer compound-dispersed aqueous solution is a method for immersing the anode body of a capacitor in a conductive polymer compound-dispersed aqueous solution to impregnate the anode body with the dispersed aqueous solution, and then drying the dispersed aqueous solution to form a conductive polymer layer directly on the anode body (see, for example, JP2007-335516A).

Also, a method for forming a conductive polymer layer, which combines the chemical oxidative polymerization method and the method for impregnating with a conductive polymer compound-dispersed aqueous solution, is disclosed (see, for example, JP2008-28314A).

In a technique described in JP2005-159154A, allegedly, performing n-stage chemical polymerization forms a dense polymer film only by the chemical polymerization to provide a solid electrolytic capacitor having high reliability that can prevent the degradation of the conductive polymer at high temperature. In the method for producing this solid electrolytic capacitor, first, a precoat layer of polystyrenesulfonic acid, a silane coupling agent, or the like is formed on an oxide film, and then, impregnation with a monomer of pyrrole constituting the conductive polymer, an oxidant, and an acid washing liquid is repeated for chemical oxidative polymerization to form a conductive polymer layer.

In this forming method, a high capacitance appearance ratio can be obtained when the solid electrolytic capacitor is formed. But, the polymerization reaction causes the dissolution, degradation, loss, and the like of the dielectric oxide film layer, and the dielectric oxide film layer becomes thin entirely or locally. Therefore, the disadvantage of decreasing leakage current characteristics and withstand voltage characteristics arises. Also, after individually impregnating with an aqueous solution containing a monomer, and an aqueous solution containing an oxidant, or impregnating with a mixed aqueous solution containing a monomer and an oxidant, room-temperature drying, acid washing, and high-temperature drying are repeated, and therefore, the problem of increasing the number of steps required to form the conductive polymer layer has arisen.

In a technique described in JP2008-28314A, a precoat layer is formed on an anodic oxide film of aluminum, using polystyrenesulfonic acid mixed with aliphatic organic acid, and then, a conductive polymer layer of polypyrrole is formed by chemical oxidative polymerization, thereby improving heat resistance.

In these related arts, the precoat layer of polystyrenesulfonic acid is formed on the dielectric layer, and then, the conductive polymer layer is formed. But, this forming method is a chemical oxidative polymerization method, and the problem of increasing the number of steps required to form the conductive polymer layer remains.

In a technique described in JP2007-335516A, the capacitance appearance ratio in the method for impregnating with a conductive polymer compound-dispersed aqueous solution is improved by using a synthesized polyethylenedioxythiophene/polystyrene sulfonate aqueous solution. When ammonium peroxodisulfate having strong oxidation power is used in producing polyethylenedioxythiophene from 3,4-ethylenedioxythiophene, the molecular weight of the obtained conductive polymer increases, or a conductive polymer having a small molecular weight aggregates in the form of particles. Therefore, the impregnation properties worsen. The impregnation properties are improved by using ammonium perborate having low oxidation power, instead of the ammonium peroxodisulfate.

In this method for producing a solid electrolytic capacitor, a precoat layer of polystyrenesulfonic acid is formed on a dielectric layer, and then, a solid electrolyte layer is formed by the method for impregnating with a conductive polymer compound-dispersed aqueous solution. But, in the method for forming the precoat layer, only the step of impregnating with a polystyrenesulfonic acid solution and a drying step are performed, and a water washing step is not performed.

Also, the method for forming the conductive polymer layer only repeats the impregnation with the conductive polymer compound-dispersed aqueous solution and drying, and therefore has a feature that the number of steps for forming the conductive polymer layer is significantly smaller than that of the above-described chemical oxidative polymerization method and electrolytic oxidative polymerization method. Also, this forming method do not involve oxidative polymerization reaction, and therefore, the dissolution, degradation, loss, and the like of the dielectric do not occur easily, and a capacitor having excellent leakage current characteristics and withstand voltage characteristics can be made.

But, a polymer has a larger particle diameter than a monomer, and therefore, it is difficult for the polymer to penetrate into the deep portions of the pores of the porous body of a valve action metal, and a problem has been that the capacitance appearance ratio is lower than that of the above-described chemical oxidative polymerization method and electrolytic oxidative polymerization method.

It is an object of an embodiment of the present invention to provide a method for producing a solid electrolytic capacitor having a high capacitance appearance ratio, low resistance, and excellent leakage current characteristics and withstand voltage characteristics by forming a conductive polymer layer in a few steps by a method for impregnating with a conductive polymer compound-dispersed aqueous solution.

### SUMMARY OF THE INVENTION

In order to achieve the above object, a method for producing a solid electrolytic capacitor according to the present invention includes the steps of forming a precoat layer on a dielectric layer by the steps of impregnating with polyacid an anode body including a porous body of a valve action metal and having the dielectric layer formed on a surface thereof, water washing, and drying; forming a solid electrolyte layer including a conductive polymer layer on the precoat layer by the steps of impregnating with and drying a conductive polymer compound-dispersed aqueous solution; and forming a cathode.

Also, the step of water washing is performed until the pH of washing water after washing is in the range of 5 to 8. Further, preferably, the polyacid is at least one selected from polysulfonic acid and polycarboxylic acid, and the polysulfonic acid is at least one selected from polystyrenesulfonic acid and polyester sulfonic acid.

Also, the weight average molecular weight of the polysulfonic acid is preferably less than 50,000. Further, the step of impregnating is preferably performed for 1 hour or more, and the valve action metal is preferably at least one selected from aluminum, tantalum, niobium, titanium, and zirconium.

In the method for forming the precoat layer according to the present invention, the dielectric layer of the porous anode body is impregnated with polyacid, then, water washing is performed, and drying is performed. This removes the excess polyacid remaining in the anode body, which is the porous body, and also, the time of impregnation with the polyacid solution and the molecular weight of the polyacid are controlled, thereby forming the thin and uniform precoat layer that can evenly cover the dielectric layer.

The action mechanism in the present invention is not clear, but the following is considered. The use of the conductive polymer compound-dispersed aqueous solution having the same charge as the polyacid solution used for forming the precoat layer, on this porous anode body, causes electrostatic repulsion between the dielectric layer and the conductive polymer solution or eliminates electrostatic attraction, thereby preventing clogging in the surface portion of the porous body.

In the present invention, in order to improve the capacitance appearance ratio of a solid electrolytic capacitor obtained by forming a conductive polymer layer by a method for impregnating with a conductive polymer compound-dispersed aqueous solution, the conductive polymer compound is allowed to penetrate into the deep portions of the pores of the porous body of the valve action metal. In other words, after impregnation with the polyacid aqueous solution, water washing and drying are performed to remove the excess polymer remaining in the anode body, which is the porous body. Also, the water washing is performed until the pH of the washing water is in the range of 5 to 8, to form the thin precoat layer on the dielectric layer. Also, the time of impregnation with the polyacid aqueous solution is 1 hour or more, thereby allowing the polyacid to penetrate sufficiently and forming the precoat layer that can evenly cover the dielectric layer. Also, the molecular weight of the polyacid is less than 50,000, and the molecular weight is limited, thereby forming the thin and uniform precoat layer. Further, an anionic colloid-dispersed solution is selected for the conductive polymer solution for forming the solid electrolyte layer, thereby preventing clogging in the surface portion of the porous body, using electrostatic repulsion between the precoat layer and the conductive polymer solution having the same charge as the polyacid solution used for forming the precoat layer.

These treatments allow the conductive polymer compound to penetrate into the deep portions of the pores of the porous body of the valve action metal to improve the capacitance appearance ratio in the method for impregnating with a conductive polymer compound-dispersed aqueous solution. Thus, it is possible to provide a method for producing a solid electrolytic capacitor having excellent capacitance appearance ratio, leakage current characteristics, and withstand voltage characteristics, in a very few steps.

### BRIEF DESCRIPTION OF THE DRAWINGS

FIG. 1 is a partial cross-sectional view of a solid electrolytic capacitor fabricated by a method for producing a solid electrolytic capacitor according to the present invention; and
FIG. 2 is a partial cross-sectional view of a solid electrolytic capacitor fabricated by a conventional method for producing a solid electrolytic capacitor.

### DETAILED DESCRIPTION OF THE PREFERRED EMBODIMENT

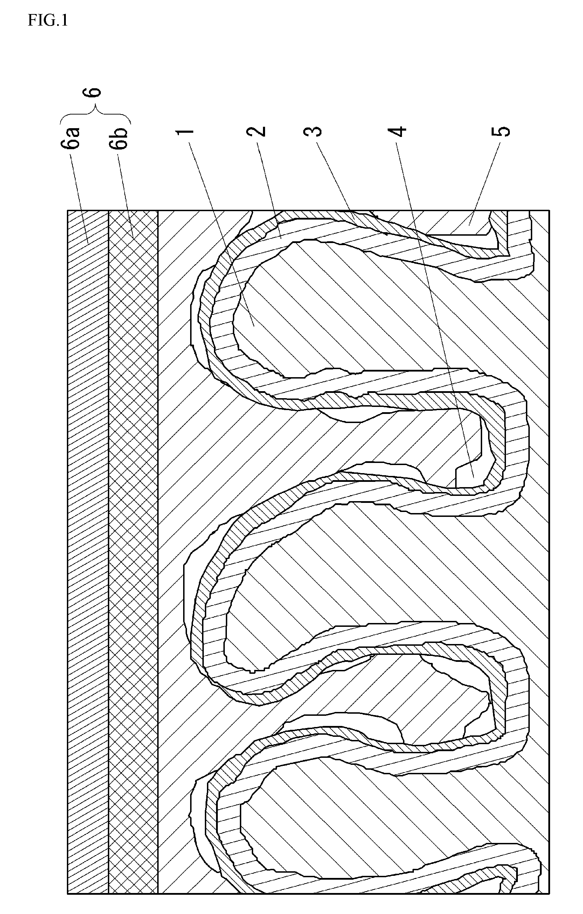

A method for producing a solid electrolytic capacitor according to the present invention will be described below with reference to the drawings. As shown in FIG. 1, a capacitor element used in a solid electrolytic capacitor generally has a configuration in which dielectric layer 2, solid electrolyte layer 5, and cathode 6 are formed on anode body 1.

Anode body 1 is formed of a plate, foil, or wire of a metal having valve action, a sintered body including fine particles of a metal having valve action, a porous body metal subjected to surface enlargement treatment by etching, and the like. Examples of the valve action metal include tantalum, aluminum, titanium, niobium, zirconium, or alloys thereof, or the like. At least one selected from tantalum, aluminum, and niobium is preferred. Examples of the shape of anode body 1 include a plate, foil, or wire of a metal having valve action, a sintered body including fine particles of a metal having valve action, a porous body metal subjected to surface enlargement treatment by etching, and the like. Particularly, a sintered body including fine particles of a metal having valve action, and a porous body metal subjected to surface enlargement treatment by etching are preferred.

Dielectric layer 2 is a film obtained by the electrolytic oxidation of the surface of anode body 1. The thickness of the oxide film can be appropriately adjusted by the voltage of the electrolytic oxidation.

For the formation of precoat layer 3, a polymer solution having a charge opposite to the surface potential of dielectric layer 2 formed on the surface of anode body 1 is selected. In this embodiment, aluminum generally having a positive surface potential under acidic conditions is selected as anode body 1, and polyacid, for example, polystyrenesulfonic acid, which is an anionic polymer solution, is selected for the formation of the precoat layer. But, the present invention is not particularly limited to these.

Precoat layer 3 is formed by impregnating with, water-washing, and drying a polymer solution of polyacid, for example, polystyrenesulfonic acid. Precoat layer 3 can be formed without the washing step. But, the excess polymer remains in anode body 1, which is a porous body, and therefore, water washing is performed to remove this. Thus, thin precoat layer 3 can be formed. The washing is preferably performed until the pH of water after the washing is in the range of 5 to 8.

The time of impregnation with the polymer solution of polyacid, for example, polystyrenesulfonic acid, is preferably 1 hour or more. Even if the impregnation time is about several minutes, precoat layer 3 can be formed. But, when the impregnation time is 1 hour or more, precoat layer 3 that can evenly cover dielectric layer 2 can be formed.

The molecular weight of the polymer solution of polysulfonic acid, for example, polystyrenesulfonic acid, is preferably less than 50,000. Polymer solutions of polysulfonic acid having a molecular weight in the wide range of 2,000 to 500,000 are commercially available. But, in terms of impregnation properties, and to form thin precoat layer 3 uniformly, it is more preferred that the molecular weight is appropriate with respect to anode body 1, which is a porous body.

Solid electrolyte layer 5 includes at least a conductive polymer layer. The conductive polymer layer is, for example, composed of a polymerized layer including a monomer including at least one or more of pyrrole, thiophene, 3,4-ethylenedioxythiophene, aniline, and derivatives thereof. Particularly, the monomer preferably includes pyrrole, thiophene, 3,4-ethylenedioxythiophene, and derivatives thereof. For dispersed aqueous solutions containing these conductive polymer compounds, those generally commercially available can be used.

The conductive polymer compound-dispersed aqueous solution is preferably an anionic colloid-dispersed solution. In this embodiment, aluminum generally having a positive surface potential under acidic conditions is selected as anode body 1, and polyacid, for example, polystyrenesulfonic acid, which is an anionic polymer solution, is selected for the formation of the precoat layer. Therefore, the conductive polymer compound-dispersed aqueous solution is preferably an anionic conductive polymer solution.

For example, a polyethylenedioxythiophene/polystyrenesulfonic acid aqueous solution is an anionic acid colloid-dispersed solution because anionic sulfonic acid is dissociated in the aqueous solution. The polyethylenedioxythiophene/polystyrenesulfonic acid aqueous solution can be used in the present invention.

Solid electrolyte layer 5 is formed by repeatedly immersing in the dispersed aqueous solution containing the conductive polymer compound and drying. Cathode 6 is not particularly limited as long as it is a conductor. But, cathode 6 may be a two-layer structure including carbon layer 6a of graphite or the like, and silver conductive resin layer 6b.

### EXAMPLES

The present invention will be more specifically described below, based on Examples, but the present invention is not limited to these Examples.

### (Example 1)

As an anode body, a porous body aluminum foil (100 µF/cm²) subjected to surface enlargement treatment by etching was processed and formed into 3 × 4 mm by a foil stamping die, and an dielectric layer was formed on the surface of the aluminum foil by electrolytic oxidation. Then, the anode body was immersed in a polymer-dispersed solution of polystyrenesulfonic acid having a weight average molecular weight of 2,000 at room temperature for 1 hour to impregnate the anode body with the polystyrenesulfonic acid. Then, water washing was performed immersing in 50 ml deionized water in a beaker for five minutes. The water washing was repeated three to five times until the pH of the washing water was in the range of 5 to 8. After finishing the water washing, drying was performed at 105°C for 30 minutes to form a precoat layer on the dielectric layer. Next, the step of immersing in a poly(3,4-dioxythiophene) solution for impregnation with the solution and then drying was repeated to form a solid electrolyte layer of a conductive polymer including poly(3,4-dioxythiophene) inside the porous pores.

Then, 9 µl of the poly(3,4-dioxythiophene) solution was dropped on the solid electrolyte layer formed inside the porous pores, and left at room temperature for 5 minutes. Then, 9 µl of the poly(3,4-dioxythiophene) solution was also dropped on the back surface, dried at 125°C for 10 minutes, and then dried at 180°C for 30 minutes to form a solid electrolyte layer including the conductive polymer. Then, a graphite layer and a silver conductive resin layer were formed on the solid electrolyte layer to provide a cathode. Three solid electrolytic capacitor elements were fabricated.

Then, using these solid electrolytic capacitor elements, electrical characteristics were evaluated. The result of measuring the capacitance appearance ratio of these elements at 120 Hz is shown in Table 1. The capacitance appearance ratio was based on the product of the aluminum foil capacitance and the element area (100 µF/cm² × 12 mm²). The capacitance appearance ratio in this Example 1 was 89%.

### (Example 2)

Solid electrolytic capacitor elements were fabricated as in Example 1, except that the time of the immersion of the porous body aluminum foil in the polymer-dispersed solution of polystyrenesulfonic acid was 4 hours. The electrical characteristics were evaluated. The result is shown in Table 1. The capacitance appearance ratio was 83%.

### (Example 3)

Solid electrolytic capacitor elements were fabricated as in Example 1, except that the time of the immersion of the porous body aluminum foil in the polymer-dispersed solution of polystyrenesulfonic acid was 10 minutes. The electrical characteristics were evaluated. The result is shown in Table 1. The capacitance appearance ratio was 80%.

### (Example 4)

Solid electrolytic capacitor elements were fabricated as in Example 1, except that polystyrenesulfonic acid having a weight average molecular weight of 14,000 was used. The electrical characteristics were evaluated. The result is shown in Table 1. The capacitance appearance ratio was 82%.

### (Example 5)

Solid electrolytic capacitor elements were fabricated as in Example 1, except that polystyrenesulfonic acid having a weight average molecular weight of 50,000 was used. The electrical characteristics were evaluated. The result is shown in Table 1. The capacitance appearance ratio was 79%.

### (Comparative Example 1)

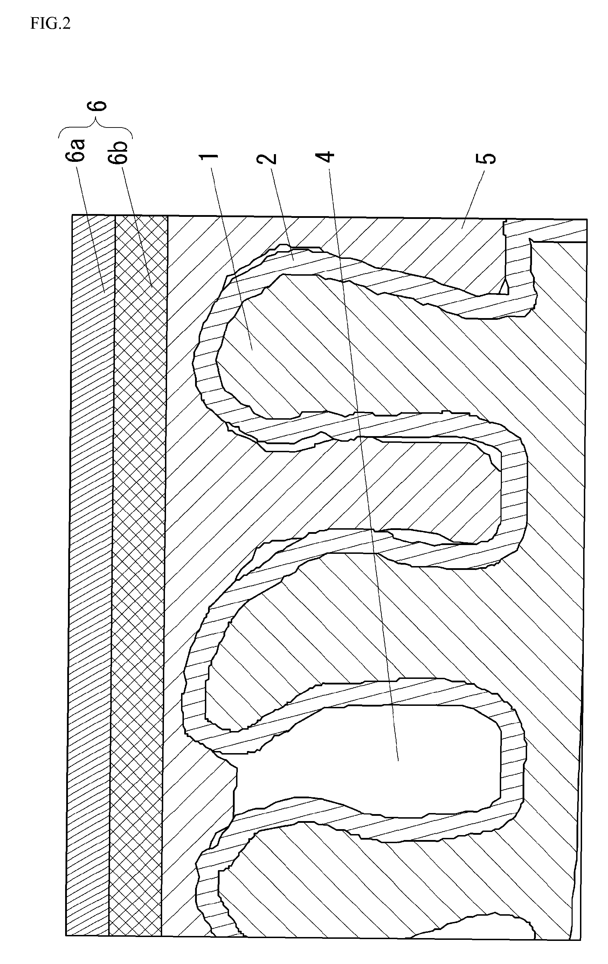

A capacitor element used in a conventional solid electrolytic capacitor generally has a configuration in which dielectric layer 2, solid electrolyte layer 5, and cathode 6 are formed on anode body 1, as shown in FIG. 2. Solid electrolytic capacitor elements were fabricated as in Example 1, without forming the precoat layer on dielectric layer 2. The electrical characteristics were evaluated. The result is shown in Table 1. The capacitance appearance ratio was 73%.

### (Comparative Example 2)

Solid electrolytic capacitor elements were fabricated as in Example 1, except that the precoat layer was formed by drying without water washing. The electrical characteristics were evaluated. The result is shown in Table 1. The capacitance appearance ratio was 68%.

### (Comparative Example 3)

Solid electrolytic capacitor elements were fabricated as in Example 1, except that the impregnation time was 10 minutes and that the precoat layer was formed by drying without water washing. The electrical characteristics were evaluated. The result is shown in Table 1. The capacitance appearance ratio was 70%.

**[Table 1]**

| Level | Capacitance appearance ratio (% at 120Hz) |
|---|---|
| Example 1 | 89 |
| Example 2 | 83 |
| Example 3 | 80 |
| Example 4 | 82 |
| Example 5 | 79 |
| Comparative Example 1 | 73 |
| Comparative Example 2 | 68 |
| Comparative Example 3 | 70 |

The presence or absence of the precoat layer was compared between Example 1 and Comparative Example 1. The formation of the precoat layer improved the capacitance appearance ratio. The impregnation time for the precoat layer was compared among Examples 1 to 3. As the impregnation time increased, the precoat layer that can evenly cover the dielectric layer was formed, and the capacitance appearance ratio was improved. The molecular weight of the polystyrenesulfonic acid was compared among Examples 1, 4, and 5. As a result of this, it was found that as the molecular weight decreased, the thin precoat layer was formed uniformly, and the capacitance appearance ratio was improved. Whether the water washing after the impregnation with the polymer-dispersed solution of polystyrenesulfonic acid was performed or not was compared among Examples 1 and 3 and Comparative Examples 2 and 3. The water washing removed the excess polystyrenesulfonic acid remaining in the anode body, which is the porous body, and therefore, the thin precoat layer was formed, and the capacitance appearance ratio was improved.

### DESCRIPTION OF SYMBOLS

- 1: anode body
- 2: dielectric layer (oxide film layer)
- 3: precoat layer
- 4: void portion
- 5: solid electrolyte layer
- 6: cathode
- 6a: carbon layer
- 6b: silver conductive resin layer

## Claims

1. A method for producing a solid electrolytic capacitor, comprising the steps of:
forming a precoat layer on a dielectric layer by the steps of impregnating with polyacid an anode body comprising a porous body of a valve action metal and having the dielectric layer formed on a surface thereof, water washing, and drying;
forming a solid electrolyte layer on the precoat layer by the steps of impregnating with and drying a conductive polymer compound-dispersed aqueous solution; and
forming a cathode.

2. The method for producing a solid electrolytic capacitor according to claim 1, wherein the step of water washing is performed until the pH of washing water after washing is in the range of 5 to 8.

3. The method for producing a solid electrolytic capacitor according to claim 1 or 2, wherein the polyacid is at least one selected from polysulfonic acid and polycarboxylic acid.

4. The method for producing a solid electrolytic capacitor according to claim 3, wherein the polysulfonic acid is at least one selected from polystyrenesulfonic acid and polyester sulfonic acid.

5. The method for producing a solid electrolytic capacitor according to claim 3 or 4, wherein the weight average molecular weight of the polysulfonic acid is less than 50,000.

6. The method for producing a solid electrolytic capacitor according to any one of claims 1 to 5, wherein the step of impregnating with polyacid is performed for 1 hour or more.

7. The method for producing a solid electrolytic capacitor according to any one of claims 1 to 6, wherein the valve action metal is at least one selected from aluminum, tantalum, niobium, titanium, and zirconium.
